# EUROPEAN PATENT SPECIFICATION

(11) **EP 0 284 265 B1**
(45) Date of publication and mention of the grant of the patent: **14.04.1993**
(21) Application number: 88302208.9
(22) Date of filing: 14.03.1988
(51) Int. Cl.: G02F 1/133

(54) **Liquid crystal display element**
Flüssigkristall-Anzeigeelement
Elément d'affichage à cristaux liquides

(30) Priority: 14.03.1987 JP 37290/87
(43) Date of publication of application: 28.09.1988
(73) Proprietor: SHARP KABUSHIKI KAISHA, Osaka 545 (JP)
(72) Inventor: Taniguchi, Kouki, Osaka-shi Osaka-fu (JP)
(74) Representative: Brown, Kenneth Richard

(56) References cited:
- EP-A- 0 023 421
- EP-A- 0 179 922
- US-A- 4 506 956
- US-A- 4 593 977
- US-A- 4 632 514

## Description

The present invention relates of liquid crystal display apparatus.

US-A-4 593 977 describes a liquid crystal device which comprises a liquid crystal cell and a pair of linear polarizing plates. The polarizing planes of these two polarizing plates are positioned parallel to each other.

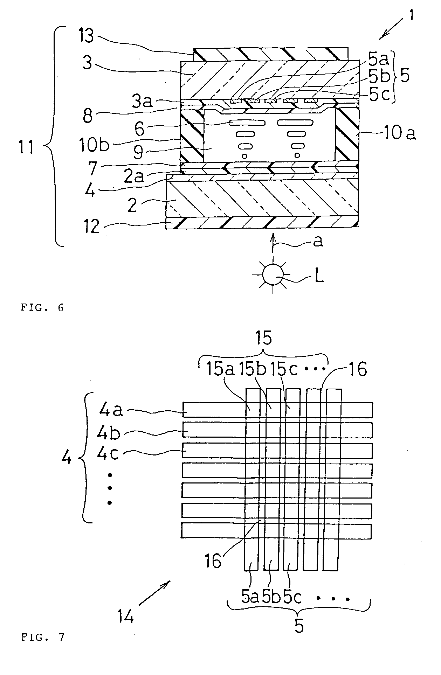

Fig. 6 is a cross-sectional view which schematically illustrates the construction of a liquid crystal display element 1 according to the prior art and Fig. 7 is a plan view thereof.

With reference to Fig. 6, the liquid crystal display element 1 comprises a pair of planar structures which sandwich a liquid crystal layer 9 therebetween. Each planar structure comprises a glass, light transmissive insulated substrate 2, 3. On the surfaces of the substrates 2, 3 which face the liquid crystal layer 9 respective sets of transparent electrodes 4, 5 are formed by such material as indium tin oxide (ITO). The transparent electrodes 4, 5 are covered with interlaminar insulated films 2a, 3a of such material as silicon oxide (SiO₂). Orientation films 7, 8 are formed on the insulated films 2a, 3a by such material as polyamide so as to be in contact with the liquid crystal layer 9. Each of the orientation films 7, 8 is subjected to rubbing treatment to provide a preferred alignment direction for the liquid crystal molecules 6 close to the film. On the surface of each glass substrate 2, 3 remote from the liquid crystal layer there is provided a respective linear polarizing plate 12, 13.

The two planar structures are sealed at the peripheries of the orientation films 7, 8 by sealing members 10a, 10b so as to define a closed space of uniform thickness into which the liquid crystal substance can be injected to form the layer 9. A liquid crystal cell 11 is thus formed. The relative orientations of the preferred alignment directions of the orientation films 7, 8 and of the absorption axes of the polarizing plates 12, 13 are established during manufacture of the cell and will be described below. In use, the liquid crystal display element 1 is illuminated by a light source L, located behind the back substrate 2, the radiation being in the direction indicated by the arrow a in Fig. 6.

Fig. 7 shows the arrangement of the sets of electrodes 4, 5, the other parts of the cell, including the liquid crystal layer between the electrodes, being omitted for clarity. One set of transparent electrodes 4a, 4b, 4c, ..., 4M (M = 1, 2, 3, ...) is formed as a plurality of mutually-parallel strips and indicated collectively by the reference numeral 4. The other set of transparent electrodes is similarly formed as a plurality of mutually-parallel strips 5a, 5b, 5c, ..., 5N (N = 1, 2, 3, ...) and indicated collectively by the reference numeral 5. The two sets of strips are arranged to intersect at right angles. Hereinafter, one of the sets of transparent electrodes are generally called horizontal electrodes 4, and the other set of transparent electrodes are generally called vertical electrodes 5.

A plurality of square portions 15a, 15b, 15c ... defined by the intersections of the two electrodes 4, 5 are called hereinafter the picture elements 15. Therefore, at the front of the display element 1, the display image 14 is formed by M x N picture elements 15. Each of the picture elements 15 is surrounded by a space 16 in which at least one of the electrodes is absent so that there is no intersection of electrodes. The space 16 effectively form non-display areas of the image 14. In the liquid crystal display apparatus having the above-described construction, the image to be displayed is established by selectively applying voltages between the horizontal electrodes 4 and the vertical electrodes 5, so that each picture element 15 at the intersection of two electrodes either transmits or blocks the light from the light source L (Fig. 6).

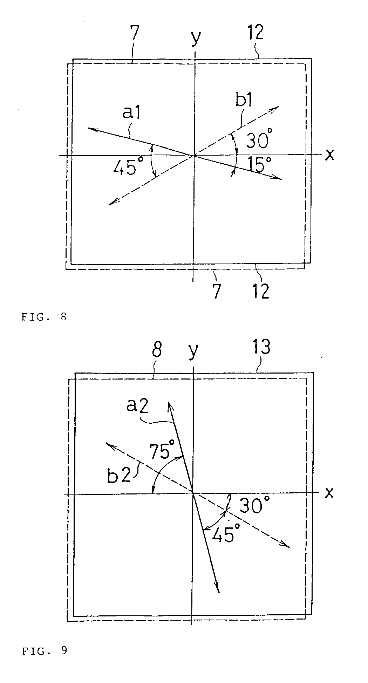

Fig. 8 is a diagram which shows the absorption axis a1 of the back side polarizing plate 12 and the preferred alignment direction b1 of the back side orientation film 7 according to the prior art. Fig. 9 is a diagram which shows the absorption axis a2 of the surface side polarizing plate 13 and the preferred alignment direction b2 of the surface side orientation film 8. As shown in Fig. 8 and Fig. 9, the angle between the absorption axis direction a1 of the back side polarizing plate 12 and the preferred alignment direction b1 of the back side orientation film 7 is 45 degrees, and the angle between the absorption axis a2 of the surface side polarizing plate 13 and the preferred alignment direction b2 of the surface side orientation film 8 is also 45 degrees. The absorption axis direction a2 of the surface side polarizing plate 13 is rotated through an angle of 60 degrees in a clockwise direction with respect to the absorption axis direction a1 of the back side polarizing plate 12. With this arrangement, the liquid crystal display element 1 is light transmissive to achieve a bright state when no voltage is applied to the electrodes, while the cell 1 shields light to achieve a dark state when a voltage is applied to the electrodes. This display is thus of the "positive" type (normally white).

With reference to Fig. 6 and Fig. 7 again, although the picture element 15 at a position where the voltage is applied shields the light from the light source L which is directly under the picture element 15, no voltage is applied at the space 16 around the aforementioned picture element 15. Therefore, an inconvenient phenomenon occurs in which the light "leaks" from this space 16, causing the contrast of the displayed image to be weakened. In particular, in the case of a colour liquid crystal display element, in which a colour filter is inserted into the liquid crystal cell, there occurs an inconvenience in which the purity of the display colour is reduced together with the contrast.

In order to solve the above problems, in the prior art a method has been used in which the space 16 is provided with what is called black matrix printing so as to fill the space and thereby prevent the leakage of light. A further method, which has been used in the case of displays having individual thin film transistors for driving each picture element 15, involves connecting each transistor to its associated picture element by metal wiring which occupies the space 16 around the picture element and is made of a light-shielding material.

However, these prior art solutions require a number of extra materials and complicated processes. Furthermore, the yield is poor and an increase in production cost is unavoidable. Therefore, there has been a need for a liquid crystal display apparatus in which the prevention of light leakage can be realised through simple processes and at a reduced cost.

An object of the present invention is to provide a liquid crystal display apparatus which solves the above-mentioned technical problems by simple means.

In accordance with the invention, there is provided a liquid crystal display apparatus according to claim 1.

With this arrangement, the liquid crystal display apparatus exhibits a light-shielding property when no voltage is applied to the electrodes. As a result, the spaces between picture elements in the display prevent light leakage so as to always appear dark. This ensures good contrast and, in the case of a colour display, also good colour purity.

The present invention will become more fully understood from the following detailed description of a preferred embodiment with reference to the accompanying drawings, in which:
Fig. 1 is a cross-sectional view showing the construction of a colour liquid crystal display apparatus of an embodiment of the present invention;
Fig. 2 is a plan view of the electrodes in the apparatus of Fig. 1;
Fig. 3 is a diagram showing an enlarged view of part of Fig. 2;
Fig. 4 is a diagram showing an arrangement of a back side orientation film and a back side polarizing plate of the colour liquid crystal display apparatus of Fig. 1;
Fig. 5 is a diagram showing an arrangement of a surface side orientation film and a surface side polarizing plate of the apparatus of Fig. 1;
Fig. 6 is a cross-sectional view which schematically shows the construction of a liquid crystal display apparatus according to the prior art;
Fig. 7 is a plan view of the electrodes in the apparatus of Fig. 6;
Fig. 8 is a diagram which shows the absorption axis of a back side polarizing plate and the preferred alignment direction of a back side orientation film according to the prior art; and
Fig. 9 is a diagram which shows the absorption axis of a surface side polarizing plate and the preferred alignment direction of a surface side orientation film of the same prior art.

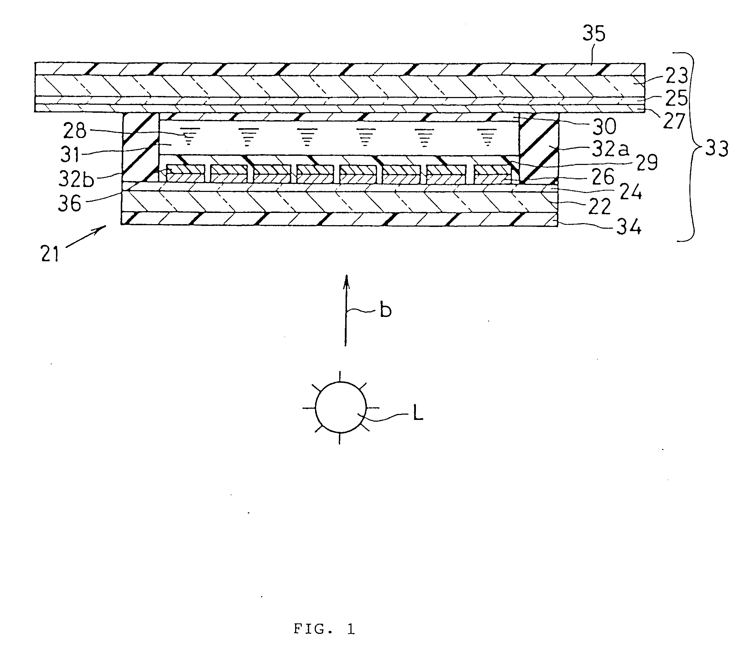

Referring to the drawings, Fig. 1 is a cross-sectional view showing the construction of a liquid crystal display element 21 of an embodiment of the present invention. The construction of the element 21 is similar to that of the prior art element 1 described above with reference to Fig. 6. Detailed description will not, therefore, be repeated. Again, the element 21 comprises two planar structures which sandwich a liquid crystal layer 31 therebetween. Each planar structure comprises a light transmissive insulated substrate 22, 23, realised by such material as glass. On the surface of each substrate 22, 23 facing the liquid crystal layer 31 there is provided: a film 24, 25, realised by such material as silicon oxide (SiO₂); a set of transparent electrode 26, 27 formed as a plurality of mutually-parallel strips and realised by such material as indium tin oxide (ITO); and an orientation film 29, 30, realised by such material as polyamide. The orientation films 29, 30 are subjected to rubbing treatment as already described with reference to Fig. 6. The two planar structures are secured together at their peripheries by sealing members 32a, 32b to define a closed space of uniform thickness into which the liquid crystal substance can be introduced to form the layer 31.

Linear polarizing plates 34, 35 are respectively installed on the surfaces of the substrate 22, 23 remote from the liquid crystal layer 31. A liquid crystal cell 33 is thus formed.

Furthermore, in the case of a colour display apparatus, a colour filter 36 is disposed on the back side transparent electrode 26 so that one specified colour of the three colours of RGB is caused to overlap each picture element. The liquid crystal display element 21 having the above laminar construction is illuminated from the back side by a light source L, which radiates in the direction indicated by the arrow b in Fig. 1.

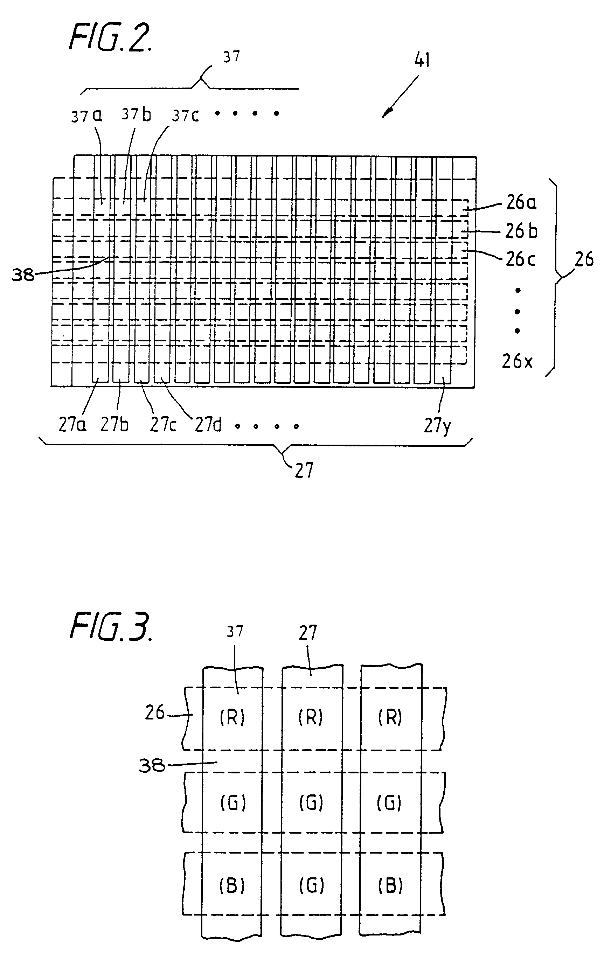

Fig. 2 is a plan view showing the basic construction of a display screen 41 which uses the liquid crystal display element of Fig. 1, and in particular showing the layout of the two sets of electrodes 26, 27. Fig. 3 is an expanded view of part of Fig. 2. In Fig. 2 and Fig. 3, the components corresponding to those shown in Fig. 1 are provided with the same reference numerals. One of the two sets of transparent electrode strips 26a, 26b, 26c ..., 26X (X = 1, 2, 3, ...) is indicated collectively by the reference numeral 26. The other set of transparent electrode strips 27a, 27b, 27c, ..., 27Y (Y = 1, 2, 3, ...) is indicated collectively by the reference numeral 27. The two sets of electrode strips are arranged to intersect at right angles. Hereinafter, one of the two intersecting electrode strips is generally called the horizontal electrode 26, and one of the other intersecting electrode strips generally called the vertical electrode 27. The plurality of square portions 37a, 37b, 37c, ... defined by the intersection of the two electrodes 26, 27 are called hereinafter the picture elements 37. Thus, the display screen 41 is composed of X x Y picture elements 37. Each picture element 37 is developed in one of the three colours of RGB by the aforementioned colour filter 36. Further, around each individual picture element 37 there exists the space 38 in which there is no electrode intersection.

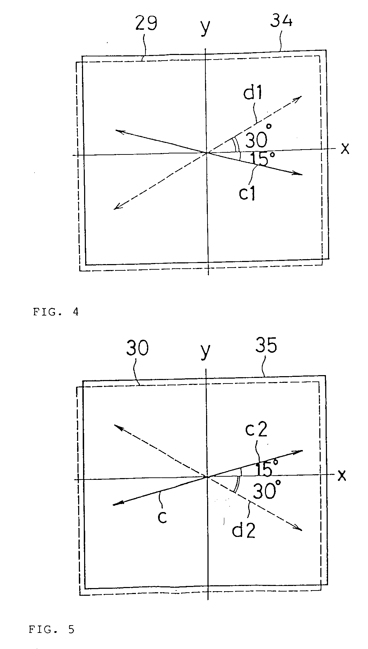

Fig. 4 is a diagram showing an arrangement of the back side orientation film 29 and the back side polarizing plate 34 of the colour liquid crystal display element 21 of Fig. 1. Fig. 5 is a diagram showing an arrangement of the surface side orientation film 30 and the surface side polarizing plate 35. As shown in Fig. 4 and Fig. 5, the angle between the absorption axis direction c2 of the surface side polarizing plate 35 and the preferred alignment direction d2 of the surface side orientation film 30 is also 45 degrees. The absorption axis direction c2 of the surface side polarizing plate 35 is rotated through an angle of 30 degrees in a clockwise direction with respect to the absorption axis direction c1 of the back side polarizing plate 34.

When Fig. 5 (illustrating an embodiment of the present invention) is compared with Fig. 9 (illustrating the prior art), it can be seen that the absorption axis direction c2 of the surface side polarizing plate 35 shown in Fig. 5 has been rotated through an angle of 90 degrees in a counter-clockwise direction with respect to the absorption axis direction a2 of the surface side polarizing plate 13 shown in Fig. 9. As a result of the new arrangement of the preferred alignment directions d1, d2 of the orientation films 29, 30 and the absorption axis directions c1, c2 of the polarizing plates 34, 35, the liquid crystal display becomes what is called the "negative" type (normally black), i.e. the display does not transmit light when no voltage is applied and transmits light when a voltage is applied to the electrodes 26, 27. In addition, the spaces 38 between the picture elements 37 do not transmit light at all, whether or not a voltage is applied to the electrodes. Therefore, in a colour liquid crystal display element 21 of this embodiment, each picture element 37 corresponding to the intersection of the transparent electrodes to which a voltage is applied becomes light transmissive, develops the colour according to the colour of the filter 36 which is aligned with the particular picture element 37. However, the inconvenient phenomenon of light leakage in the spaces 38 is prevented, so that the contrast of the displayed image is enhanced and the purity of the display colour is improved remarkably.

In the embodiment described above, a colour filter 36 is provided on the back side transparent electrode 26 to realise a colour display. However, it is possible also to realise an arrangement for a monochrome display in which the colour filter is omitted. In this case, the display screen does not transmit light when no voltage is applied, whereas a picture element to which a voltage is applied transmits the light. Thus, the display status of what is called normally black is achieved.

In the embodiment described above, illumination from the back side of the apparatus is provided by the light source L to realise a light transmissive type display. In an alternative embodiment, the display may be made what is called the reflective type by laminating further a reflecting plate on the back side deflecting plate. In this way, light radiated into the display screen is caused to be reflected by the abovementioned reflecting plate so as to obtain the displayed image by the reflected light from the reflecting plate. By this arrangement, it is possible to utilise an external light as the light source and to reduce the thickness of the display screen.

According to the present invention as described above, because a liquid crystal layer exists between a pair of electrodes at least one of which is transparent and the axis directions of the polarized light absorption axes of a pair of polarizing plates arranged respectively on both sides of the abovementioned liquid crystal layer are selected so as to have light shielding quality when no voltage is applied between the aforementioned electrodes, the light is shielded when no voltage is applied between the electrodes. Therefore, the light leakage from the space where no voltage is applied is prevented and a high grade liquid crystal display element with remarkably improved purity of the display colour is realised. Consequently, a clear display screen with excellent screen contrast quality is realised at the same production cost as that of the prior art.

While only certain embodiments of the present invention have been described, it will be apparent to those skilled in the art that various changes and modifications may be made therein without departing from the scope of the present invention as claimed.

## Claims

1. A liquid crystal display apparatus comprising: a pair of planar structures arranged substantially parallel and opposite to each other; a liquid crystal layer (31) confined between said pair of planar structures; each planar structure being formed by a transparent substrate (22, 23) having a linear polarizing plate (34, 35) arranged on the surface remote from the liquid crystal layer (31), and having a set of transparent electrodes (26, 27) and an orientation film (29, 30), providing a preferred alignment direction for the liquid crystal molecules deposited on the surface facing the liquid crystal layer (31); wherein the two sets of electrodes form a matrix in which the intersections of electrodes define picture elements of the display
characterized in that
the angle between the absorption axis direction (c1, c2) of each polarizing plate (34, 35) and the preferred alignment direction (d1, d2) of the associated orientation film (29, 30) is 45 degrees for each said planar structure, and that
the absorption axis direction (c2) of one polarizing plate (35) is rotated through an angle of 30 degrees with respect to the absorption axis direction (c1) of the other polarizing plate (34).

2. A liquid crystal display apparatus according to claim 1, wherein a colour filter layer (36) is formed on one (26) of said sets of electrodes.

3. A liquid crystal display apparatus according to claim 1, wherein a light reflecting film is formed on one of said planar structures for reflecting light transmitted through said liquid crystal layer (31).

## Patentansprüche

1. Flüssigkristall-Anzeigevorrichtung umfassend:
ein Paar planarer Strukturen, die im wesentlichen parallel und gegenüberliegend zueinander angeordnet sind;
eine Flüssigkristallschicht (31), die zwischen dem Paar planarer Strukturen eingeschlossen ist; wobei jede planare Struktur durch ein transparentes Substrat (22, 23) mit einer Linear-Polarisationsplatte (34, 35), die auf der von der Flüssigkristallschicht (31) abgewandten Oberfläche angeordnet ist, und mit einem Satz transparenter Elektroden (26, 27) und einem Orientierungsfilm (29, 30), der eine bevorzugte Ausrichtungsrichtung für die Flüssigkristall-Moleküle bereitstellt, der auf der der Flüssigkristallschicht (31) zugewandten Oberfläche aufgebracht ist, gebildet ist; worin die zwei Elektrodensätze eine Matrix bilden, in der die Kreuzungen der Elektroden Bildelemente der Anzeige abgrenzen, *dadurch gekennzeichnet,* daß
der Winkel zwischen der Absorptionsachsenrichtung (c1, c2) von jeder Polarisationsplatte (34, 35) und der bevorzugten Ausrichtungsrichtung (d1, d2) des zugehörigen Orientierungsfilms (29, 30) 45 Grad für jede planare Struktur beträgt, und daß
die Absorptionsachsenrichtung (c2) einer Polarisationsplatte (35) durch einen Winkel von 30 Grad in Bezug auf die Absorptionsachsenrichtung (c1) der anderen Polarisationsplatte (34) gedreht ist.

2. Flüssigkristall-Anzeigevorrichtung nach Anspruch 1, worin eine Farbfilterschicht (36) auf einem (26) von den Elektrodensätzen gebildet ist.

3. Flüssigkristall-Anzeigevorrichtung nach Anspruch 1, worin ein lichtreflektierender Film auf einer von den planaren Strukturen zum Reflektieren des durch die Flüssigkristallschicht (31) übertragenen Lichts gebildet ist.

## Revendications

1. Dispositif d'affichage à cristaux liquides comprenant : une paire de structures planes disposées sensiblement en parallèle et se faisant face ; une couche de cristaux liquides (31) enfermée entre ladite paire de structures planes ; chaque structure plane étant formée d'un substrat transparent (22, 23) ayant une plaque de polarisation rectiligne (34, 35) disposée sur la face distante de la couche de cristaux liquides (31), et ayant un jeu d'électrodes transparentes (26, 27) et un film d'orientation (29, 30), fournissant une direction d'alignement préférée aux molécules de cristaux liquides, déposés sur la face tournée vers la couche de cristaux liquides (31) ; dans lequel les deux jeux d'électrodes forment une matrice dans laquelle les intersections des électrodes définissent des éléments d'image de l'affichage, caractérisé en ce que l'angle formé entre la direction de l'axe d'absorption (c1, c2) de chaque plaque de polarisation (34, 35) et la direction d'alignement préférée (d1, d2) du film d'orientation associé (29, 30) est de 45 degrés pour chacune desdites structures planes, et en ce que la direction de l'axe d'absorption (c2) d'une plaque polarisante (35) est décalée en rotation d'un angle de 30 degrés par rapport à la direction de l'axe d'absorption (c1) de l'autre plaque de polarisation (34).

2. Dispositif d'affichage à cristaux liquides selon la revendication 1, dans lequel une couche filtrante colorée (36) est formée sur l'un desdits jeux d'électrodes (26).

3. Dispositif d'affichage à cristaux liquides selon la revendication 1, dans lequel un film réfléchissant la lumière est formé sur l'une desdites structures planes pour réfléchir la lumière transmise à travers ladite couche de cristaux liquides (31).
